# EUROPÄISCHE PATENTANMELDUNG

(11) **EP 4 799 963 A1**
(43) Veröffentlichungstag der Anmeldung: **02.09.2026**
(21) Anmeldenummer: 26000007.0
(22) Anmeldetag: 11.02.2026
(51) Int. Cl.: B65G 21/18, A47F 10/06, A47L 15/24, B65G 33/04, A47L 15/00

(54) **FÖRDEREINRICHTUNG ODER SENKRECHTFÖRDERER ODER SPIRALFÖRDERER FÜR OBJEKTE ENTLANG ODER AUF WENIGSTENS EINER SCHIENE**

(30) Priorität: 27.02.2025 DE 102025000707
(71) Anmelder: Rollercoasterrestaurant GmbH&Co. KG, 1020 Wien (AT)
(72) Erfinder: MACK, Michael, 90427 Nürnberg (DE)
(74) Vertreter: Dorn, Dietmar

(57) **Zusammenfassung**

Fördervorrichtung für Transportmittel insbesondere für Transportmittel für Objekte und/oder für Speisen und/oder Getränke zur senkrechten Förderung der Transportmittel mit einem unteren Zugang und einem oberen Abgang für Transportmittel umfassend wenigstens eine Schiene für die Bewegung der Transportmittel vom unteren Zugang zum oberen Abgang der Fördervorrichtung,
**dadurch gekennzeichnet**,
dass die Beförderung der Transportmittel auf zwei parallelen Schienenelementen oder Rohren erfolgt, welche sich wendelförmig vom unteren Zugang zum oberen Abgang erstrecken und die Transportmittel über Gleitfüße oder Rollenelemente verfügen womit Transportmittel auf der Schiene oder den zwei parallel verlaufenden Schienen mittels eines Antriebs von ihrer unteren Position zu dem oberen Abgang gefördert werden.

## Beschreibung

Die Erfindung betrifft eine Fördereinrichtung, und zwar einen senkrechten Förderer für Objekte, insbesondere Speisen und/oder Getränke wie in einem Restaurantsystem (auch: Gastronomiesystem) gemäß dem Oberbegriff des Anspruchs 1.

Zur Förderung von Objekten oder Teilen, wie aber auch Speisen und Getränken sind verschiedene Fördervorrichtungen bekannt. Beispielsweise sind Systeme bekannt welche Speisen und Getränke in dafür vorgesehenen Behältnissen auf Rollenbahnen oder einem Schienensystem befördern und diese auf diese Weise von einem Küchenbereich zum Gast transportieren zu können, wie beispielsweise aus der DE10 2005 059 188.4 bekannt, in welcher der Transport entlang eines Schienensystems erfolgt. Die Bewegung der Transportmittel auf den Schienen findet in diesen Fällen durch ein definiertes Gefälle der Schienen statt und die Transportmittel verfügen entsprechend über Eingriffsmittel auf den Rollen oder Schienen.

Der Startbereich eines derartigen Restaurants muss daher stets deutlich höher als der Servierbereich oder Gästebereich sein, um ein ausreichendes Gefälle für die Beförderung der Transportmittel zu ermöglichen.

In vielen Locations ist es nicht möglich, die Küche oben im Raum oder in einem oberen Stockwerk anzusiedeln. Oft muss unten gekocht bzw. die Speisen und/oder Getränke konfiguriert werden. Die Speisen werden in Töpfe resp. Topfvorrichtungen und die Getränke in Flaschen oder Schraubgläsern oder Ähnlichem in die

Getränkevorrichtungen gestellt - ggfs. mit einer Art Sicherheitsgurt gesichert. In der Küche gibt es dann meist eine zentrale Schiene in der Mitte. Von zwei oder sogar drei Seiten wird zugearbeitet und die beladenen Transportvorrichtungen auf die Schiene gestellt.

Um den Aufwand des manuellen Transports der Transportmittel vom unten angeordneten Küchenbereich zu dem oben gelegenen Versand - oder Transportbereich zu reduzieren, wird in der DE102013102674.5 eine Variante für ein beschriebenes Restaurantsystem genannt, welches mit einem Aufzug für den Transport der Transportmittel ausgerüstet ist und zunächst die Transportmittel in eine Höhe bringt, von welcher aus die Speisen und/oder Getränke in den Transportmitteln dann auf einem Schienensystem zu den jeweiligen Gasttischen, bevorzugt mittels Schwerkraft befördert werden. Allerdings kann ein derartiger Aufzug lediglich die Transportvorrichtungen für einen einzelnen Gasttisch in die Höhe transportieren, da an die, aus dem Aufzug ausgehende Schiene lediglich eine Schiene zu einem Gasttisch angeordnet ist. Demgemäß wären mehrere solche Aufzüge nötig, um ein ganzes Restaurant versorgen zu können. Es hat sich gezeigt, dass entsprechende Systeme zwar den Transport der Transportmittel von dem unten gelegenen Küchenbereich zu einem oberen Bereich überbrücken können, diese verwendeten Aufzüge, wie in der DE102013102674.5 vorgeschlagen, aber störungsanfällig sein können oder bei großer Auslastung schnell an Grenzen stoßen können. Hauptsächlich ist oft die benötigte Zeit für die nacheinander erfolgte Bewegung der Transportmittel nach oben ein Problem.

Weiter ist ein sogenannter Steilförderer bekannt, welcher in der Art eines Förderbandes arbeitet.

In der Mitte befindet sich die Edelstahlschiene, rechts und links davon befinden sich angetriebene Ketten, an die rechts und links - jeweils parallel - nach Innen stehende Finger aus Kunststoff montiert sind, welche die Transportvorrichtungen auf den Schienen nach oben bewegen. Auch dieser Förderer weist den Nachteil auf, dass der Steilförderer oft gewartet werden muss, da sich die Ketten verschieben, die Finger dann nicht mehr parallel laufen und die Finger auch abbrechen. Weiter ist dieser Förderer relativ lang, da er die Höhe mit einem 45° Winkel überbrückt und daher viel Platz benötigt, außerdem sind die parallellaufenden Ketten extrem laut, was sehr stark zu hören ist und die Gäste stört.

Wünschenswert wäre eine Fördervorrichtung für Transportmittel, welche einen senkrechten Transport der Transportmittel erlaubt und bei geringem Platzbedarf einen schnellen und kontinuierlichen Transport von Transportmitteln vom Küchenbereich zu einem höher liegenden Verteilbereich oder weiteren Konfigurationsabschnitt ermöglicht.

Mittels des erfindungsgemäßen Spiralförderer können die Transportmittel aus der Küche mit einem kleinen Schubs oder auch angetrieben in Richtung Spiralförderer gleiten, der die beladenen Vorrichtungen zu einer höher im Raum gelegenen Versandplattform fördert. Dort gleiten die Transportvorrichtungen mit dem Gefälle der abgehenden Schiene aus dem Förderer auf eine Art Verteilschiene, die sich entlang der Versandplattform befindet.

Hierfür können die Speisen und Getränke in den Vorrichtungen vertikal aus den deutlich schmäleren Schienen auf der Versandplattform nach oben weggenommen werden, da die Gleitfüße die Schienen nicht mehr umgreifen resp. zurückhalten, da das Rohr einen kleineren Durchmesser hat. Auch die vertikal verlaufende Schiene in der Küche hat einen deutlich kleineren Durchmesser als die "Achterbahn-Schienen", damit die Transportvorrichtungen hier problemlos aufgesteckt werden können. Erst bei der Ausfahrt aus der Küche ändert sich die Stärke der Schiene so, dass die Gleitfüße die Schiene umgreifen und nicht aus der Schiene fallen können. Der Übergang auf die Schiene mit dem größeren Durchmesser erfolgt auf einer längeren Strecke von ca. 20-30 cm, so dass die Gleitfüße nicht durch Kanten oder Ähnliches behindert werden können.

Der vorliegenden Erfindung liegt daher die Aufgabe zugrunde, ein neues Fördersystem, insbesondere für Restaurantsysteme anzugeben, insbesondere ein Restaurantsystem bei dem Speisen und/oder Getränke in eine gegenüber der Küche höherliegende Position transportiert werden können.

Diese Aufgabe wird hinsichtlich der Fördervorrichtung gelöst durch die Merkmale des Anspruchs 1. Vorteilhafte Ausgestaltungen und Weiterbildungen sind in den jeweils abhängigen Ansprüchen angegeben. Das erfindungsgemäße Restaurantsystem ist dadurch gekennzeichnet, dass die Beförderung der Transportmittel auf zwei parallelen Schienenelementen oder Rohren erfolgt, welche sich wendelförmig vom unteren Zugang zum oberen Abgang erstrecken und die Transportmittel über Gleitfüße oder Rollenelemente verfügen, womit Transportmittel auf der Schiene oder den zwei parallel verlaufenden Schienen mittels eines Antriebs von ihrer unteren Position zu dem oberen Abgang gefördert werden.

Es könnte eine weitere Aufgabe sein, dass die Bar an einer anderen Stelle angesiedelt ist als die Küche und vielleicht gibt es sogar noch eine dritte Stelle, die Salate oder Desserts produziert. Insofern könnte es sein, dass es zu dem Spiralförderer mehrere zuführende Schienen gibt. In einem Spiralförderer können sich - je nach Bedarf, was transportiert werden soll - mindestens drei Schienen übereinander befinden, die sich im Förderer nach oben Wendeln. Insofern gibt es dann drei einführende Schienen, die übereinander liegen und oben wiederum drei ausführende Schienen, die ebenfalls übereinander liegen.

Oben fahren dann auch drei Schienen- übereinander liegend - aus dem Spiralförderer aus. Diese können dann über ein Weichensystem wieder zu einer Schiene zusammengeführt werden, oder aber auch in drei verschiedene Richtungen verlaufen oder auch in drei übereinanderliegenden Entnahme-Schienen enden.

Ein weiterer Aspekt wäre, den Mehrfachspiralförderer in einem Kaufhaus oder einer Mall oder einem Kino oder ähnlichem, zum Beispiel im Luftraum oder im Inneren des Treppenhauses zu installieren. Unten könnte sich eine Bar oder Küche befinden, wo Speisen und Getränke produziert werden. Dann werden diese Speisen und Getränke - abhängig davon auf welchem Stockwerk diese bestellt wurden - auf Schiene 1, 2, 3 oder n des Spiralförderers eingefädelt, um dann in das jeweilige Stockwerk transportiert zu werden, wo die Speisen und Getränke bestellt wurden. Dort könnte sich dann ein Ausgabebereich oder ein paar Tische befinden, wo Gäste die Speisen und Getränke genießen.

Wichtig ist hier der erfindungsgemäße Antrieb, der sich im Inneren der Spirale befindet und bevorzugt den inneren Gleitfuß eines Transportmittels angreift und das Transportmittel vor sich herschiebt. So ist es möglich, dass die Transportvorrichtungen - ggfs. auch auf mehreren Ebenen - ungehindert aus dem Spiralförderer ausfahren können.

Nach einer weiteren Ausführung wäre eine Variante möglich, in welcher es um den eigentlichen Spiralförderer nach unten eine oder mehrere spiralförmig verlaufende Schienen aufweist, auf denen man die Transportvorrichtungen, die leeren Gläser und Flaschen oder das schmutzige Geschirr wieder nach unten zur Bar oder Küche transportiert. Dies könnten bei mehreren Stockwerken auch eine oder mehrere Schienen sein.

Auf die beschriebene Art könnten beispielsweise verschiedenste Produkte, wie Geschenkartikel oder Schmuck in einer Mall transportiert werden.

Eine spektakulärere Ausführung wäre beispielsweise in Malls mit großen Höhen und Lufträumen möglich. Hier könnte der Spiralförderer einige Meter höher transportieren. Die ausfahrende Schiene könnte dann beispielsweise zunächst spektakulär durch einen Looping führen, bevor sie bei der Ausgabestelle oder am Abgabetresen in einem der verschiedenen angefahrenen Stockwerke ankommt.

Wichtig ist der Antrieb, welcher sich im Inneren der Spirale befindet und wenigstens den inneren Gleitfuß antreibt. So ist es möglich, dass die Transportvorrichtungen - ggfs. auch auf mehreren Ebenen - ungehindert aus dem Spiralförderer ausfahren können.

Hinsichtlich der weiteren Ausbildung einer Fördervorrichtung z.B. für ein Restaurantsystems, beispiels- weise im Hinblick auf Schienen und Schienensysteme, Transporthilfsmittel und Behältnisse für die Speisen und/oder Getränke wird Bezug genommen auf die in DE 10 2005 059 188 B4 und EP 1 833 331 B1 beschriebenen Restaurantsysteme. Die in diesen Veröffentlichungen beschriebenen Merkmale von Restaurantsystemen können auch bei einer erfindungsgemäßen Fördervorrichtung, insbesondere Restaurantsystem verwirklicht werden.

Die Erfindung wird nachstehend auch hinsichtlich weiterer Merkmale und Vorteile anhand der Beschreibung von Ausführungsbeispielen und unter Bezugnahme auf die beiliegenden schematischen Zeichnungen näher erläutert. Es zeigen
Fig. 1 eine perspektivische Darstellung einer Fördervorrichtung zur senkrechten Förderung von Transportmitteln.
Fig. 2 einen Abschnitt der Fördervorrichtung mit mehreren Transportmitteln, welche durch die Fördervorrichtung senkrecht nach oben bewegt werden.
Fig. 3 einen Abschnitt der Fördervorrichtung mit beispielhafter Darstellung der Förderfunktion der Transportmittel entlang eines wendelförmigen Schienenverlaufs.
Fig. 4 eine Detaildarstellung der Förderfunktion für die Transportmittels durch Kontakt der Transportmittel mit einer Mitnahme Vorrichtung der Fördervorrichtung
Fig. 5 eine weitere Detaildarstellung der Förderfunktion für die Transportmittels durch Kontakt der Transportmittel mit einer Mitnahme Vorrichtung der Fördervorrichtung.
Fig. 6 eine Detaildarstellung der Transportmittel auf dem Schienensystem und Transport der Transportmittel auf den Schienen der Fördervorrichtung.

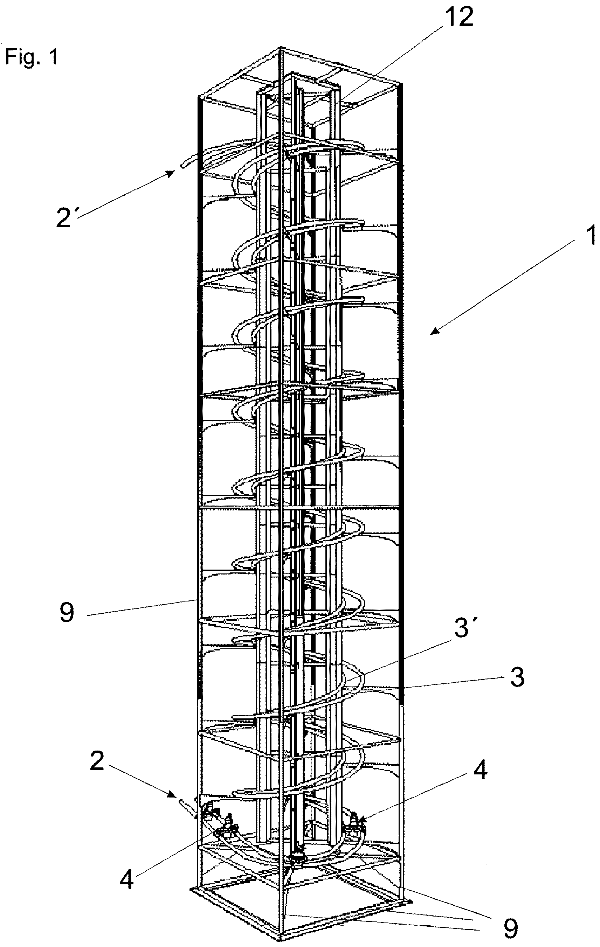

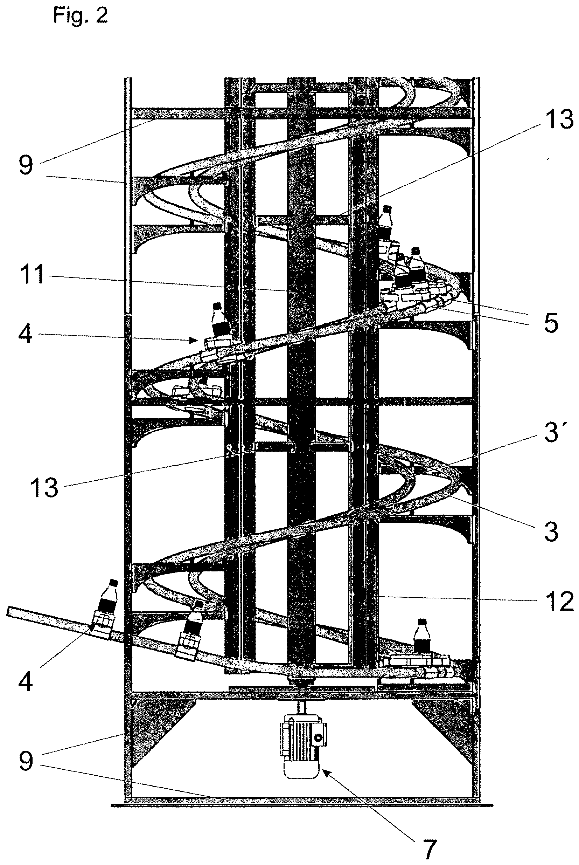

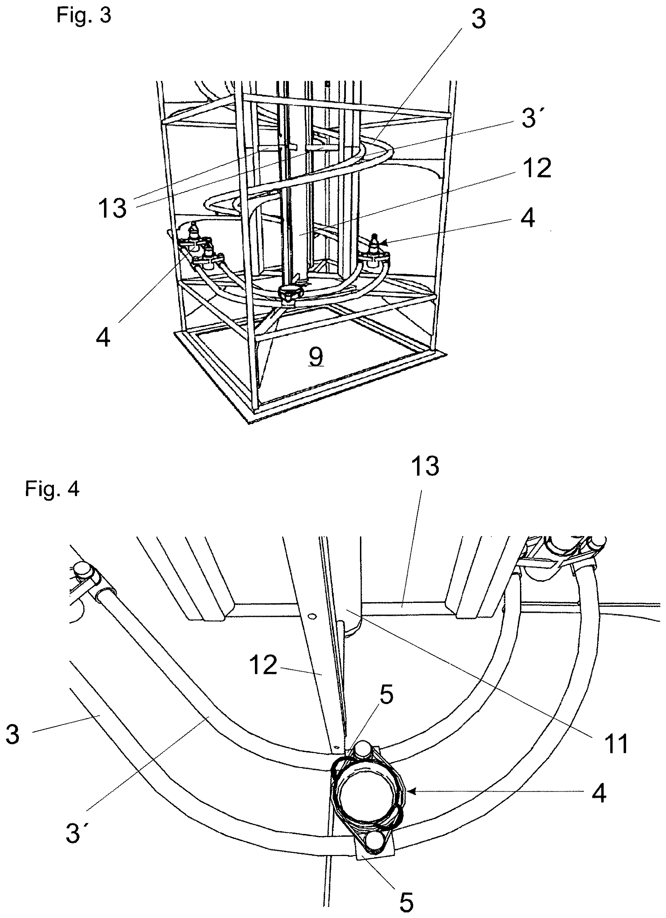

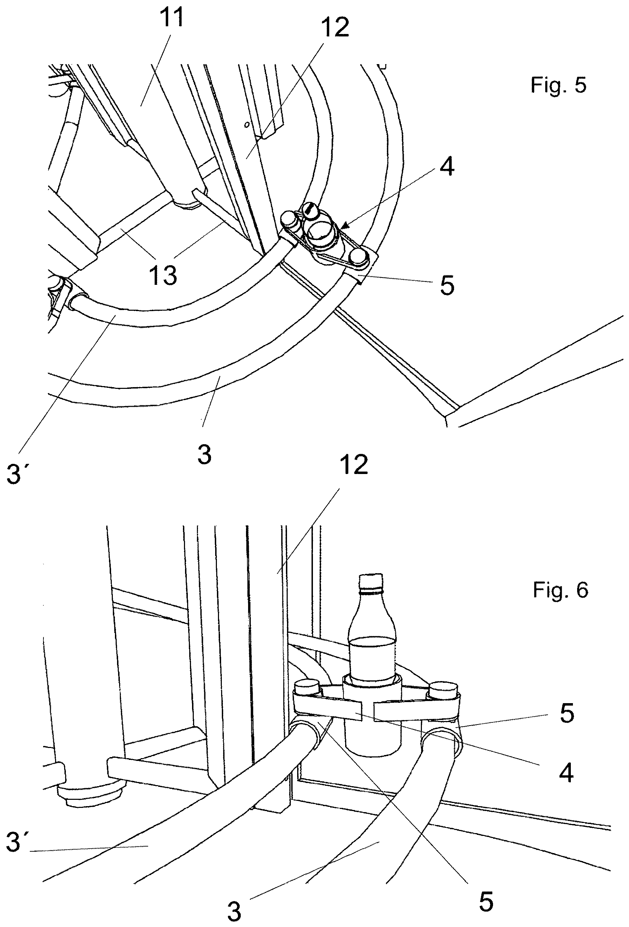

In der Fig. 1 ist beispielhaft ein erfindungsgemäßer Senkrecht- oder Horizontalförderer 1 gezeigt, welcher kompakt als Turm 9 ausgeführt ist und innerhalb welchem, wenigstens ein paralleles Schienenpaar 3, 3' wendel- oder spiralförmig von einer unteren Position 2 zu einer höheren Position 2' angeordnet ist. Die spiralförmig verlaufenden Schienenpaare sind zur Aufnahme von Transportmitteln 4 gestaltet, wobei die Transportmittel dafür mit Gleitfüßen 5 zum Aufsetzen auf das Schienenpaar ausgebildet sind. Die Gleitfüße sind dabei so ausgebildet, dass diese jeweils ein Rohr wenigstens zur Hälfte des jeweiligen Rohrdurchmessers, wie beispielshaft in Fig. 2 bis Fig. 6 gezeigt, über- oder umgreifen. Die parallelen Rohre bilden dabei die Schiene für die Transportmittel 4. In diesen unteren Startbereich 2 werden die Transportmittel beispielsweise auf den unteren Startpunkt des Spiralförderers 1 aufgesetzt bzw. eingefädelt oder schon bereits auf Schienen zugeführt und fahren in den Spiralförderer hinein. Im Inneren des Spiralförderers ist eine zentrierte, bevorzugt gelagerte Achse 11 angeordnet, welche mit einer Mehrzahl von horizontalen Abkragungen 13 ausgerüstet ist, an deren Enden vertikale Stangen 12 angebracht sind, welche derart positioniert sind, dass diese minimal in Berührung mit dem inneren Rohr 3' gelagert sind. In der bevorzugten Ausführung sind diese äußeren Flächen der Stangen 12 dafür aus einem gleitfähigen Kunststoff ausgebildet, um die Reibung der Stangen an der Schiene 3'möglichst gering zu halten. Nach einer weiteren vorteilhaften Ausführung sind die vertikalen Stangen 12 als zwei Stangen aufeinander ausgeführt, von welchen die äußere aus dem gleitfähigen Kunststoff besteht und mittels geeigneter Verschraubung an der zweiten Hälfte der Stange aufgeschraubt ist. Somit kann die Reibung zwischen der Fläche des spiralförmigen Rohres 3' entsprechend eingestellt und korrigiert werden. Der Abstand der Oberfläche der Stange 12, insbesondere der gleitfähigen Kunststofffläche zur Außenseite der inneren Schiene ist dabei so gewählt, dass diese geringer ist als die Wandstärke des Gleitfußes 5, welcher auf die Schiene aufgesetzt ist, womit die Stange bei Bewegung der Achse und Rotation der Stangen in Kontakt mit der Wandstärke des Gleitfußes 5, wie in Fig. 4 gut zu sehen, kommt und somit das Transportmittel 4, wie mit einem Rechen mitnimmt und nach oben entlang der Spirale befördert.

Auf diese Weise können Transportmittel, die am unteren Punkt 2, fahrend auf Schienen ankommen oder eingefädelt werden, in den Spiralförderer einfahren und kontinuierlich vom unteren Punkt 2 des Spiralförderers zum oberen Punkt 2' mitgenommen werden. In der gezeigten Ausführung des Spiralförderers erfolgt die Mitnahme der Transportmittel 4 bei Drehung der Achse entgegen dem Uhrzeigersinn. Dabei kommen die, mit der Achse 11 verbundenen, vertikalen Stangen oder Platten 12 bei Drehung der Achse in Kontakt mit den Gleitfüßen 5 und nehmen dieses Transportmittel mit nach oben. Die Gleitfüße können in Varianten auch mit verschiedenen Rollenelementen ausgeführt werden welche die Reibung weiter reduzieren, diese können dann für die Mitnahme der Transportmittel auf den Schienen mit Angriffsmitteln ausgerüstet werden damit die rotierenden vertikalen Stangen oder Platten, diese mitnehmen können.

Der Antrieb 7 für die Achse 11 zur Rotation der Stangen oder Platten 12 entlang der Fläche der inneren Schiene 3' kann sowohl unter wie auch über dem Förderer angeordnet sein. Auch kann sich eine Ausrüstung des Förderers mit zwei Antrieben empfehlen.

## Patentansprüche

1. Fördervorrichtung (1) für Transportmittel (4) insbesondere für Transportmittel für Objekte und/oder für Speisen und/oder Getränke zur senkrechten Förderung der Transportmittel mit einem unteren Zugang (2) und einem oberen Abgang (2 ') für Transportmittel (4) umfassend wenigstens eine Schiene für die Bewegung der Transportmittel vom unteren Zugang zum oberen Abgang der Fördervorrichtung,
**dadurch gekennzeichnet,**
**dass** die Beförderung der Transportmittel (4) auf zwei parallelen Schienenelementen oder Rohren (3) erfolgt, welche sich wendelförmig vom unteren Zugang zum oberen Abgang erstrecken und die Transportmittel (4) über Gleitfüße (5) oder Rollenelemente verfügen womit Transportmittel auf der Schiene oder den zwei parallel verlaufenden Schienen mittels eines Antriebs (7) von ihrer unteren Position zu dem oberen Abgang gefördert werden.

2. Fördervorrichtung nach Anspruch 1,
**dadurch gekennzeichnet,**
**dass** die wellenförmig, nach oben gerichtete Schiene (3) oder das Schienenpaar innerhalb einer stabilisierenden Konstruktion oder Käfigs (9) verläuft.

3. Fördervorrichtung nach Anspruch 1 und 2,
**dadurch gekennzeichnet,**
**dass** mittig in der Käfigkonstruktion eine vertikal verlaufende Achse (11) vom untersten Punkt der Fördervorrichtung zum ihrem obersten Punkt verläuft, an welcher horizontale Abkragungen (13) angeordnet sind, welche an ihren, der Achse abgewandten Enden, mit vertikal verlaufenden Stangen ausgerüstet sind an welchen in ihrem Abstand zur Achse einstellbare Stäbe oder Streifen (12) aus einem gleitfähigen Material fixiert sind mittels welcher das Transportmittel auf der Schiene durch Kontakt der Streifen (12) mit den Gleitfüßen (5) nach oben hin befördert werden.

4. Fördervorrichtung nach Anspruch 2,
**dadurch gekennzeichnet,**
**dass** die, zentriert im Mittelpinkt der Konstruktion (9) verlaufende Achse (11) wenigstens an einem ihrer Enden mit einem Antrieb (7) ausgerüstet ist.

5. Fördervorrichtung nach Anspruch 1,
**dadurch gekennzeichnet,**
**dass** die Schienen in Edelstahl ausgeführt sind.

6. Fördervorrichtung nach Anspruch 3,
**dadurch gekennzeichnet,**
**dass** die nach oben gerichtete Förderung der Transportmittel entlang der Schienen mittels des entstehenden Kraftschlusses zwischen den Stäben oder Streifen (12) mit dem Umfang der Gleitfüße (5) beim drehen der Achse (11) und der daran fixierten Stangen mit Streifen (12) erfolgt und die Transportmittel die Schienen auf der nach oben gerichteten Wendel voranschieben.

7. Fördervorrichtung nach Anspruch 3,
**dadurch gekennzeichnet,**
**dass** die, an den vertikal verlaufenden Stangen angebrachten Stäbe oder Streifen zur Mitnahme der Transportmittel aus einem abriebfesten, aber gleitfähigem Kunststoff ausgeführt sind.

8. Fördervorrichtung nach Anspruch 1,
**dadurch gekennzeichnet,**
**dass** das Transportmittel mit zwei Gleitfüßen ausgerüstet ist von welchen ein Gleitfuß über das innere Rohrelement und der andere Gleitfuß über das äußere Rohrelement der parallel verlaufenden Rohre wendelförmig nach oben geführt ist.

9. Fördervorrichtung nach Anspruch 1 und 3,
**dadurch gekennzeichnet,**
**dass** die vertikalen Stäbe oder Streifen (12), welche bei Rotation der Achse (11) in Kontakt zu der Innen verlaufenden Schiene (3) und des Umfangs eines Gleitfußes (5) greifen und somit das Transportmittel entlang der Schiene nach oben schieben, bezüglich ihrer Kontaktierung an die innere Schiene einstellbar ausgeführt sind.

10. Fördervorrichtung nach Anspruch 1 und 10,
**dadurch gekennzeichnet,**
**dass** die Einstellung der Stärke des Kontakts der vertikalen Stäbe oder Streifen an der inneren Schiene mittels Einstellschrauben zwischen den vertikal verlaufenden Stangen und den Stäben oder Streifen (12) möglich ist.
